# EUROPEAN PATENT SPECIFICATION

(11) **EP 2 053 810 B1**
(45) Date of publication and mention of the grant of the patent: **05.10.2016**
(21) Application number: 07119165.4
(22) Date of filing: 24.10.2007
(51) Int. Cl.: H04L 12/58, H04M 1/725

(54) **Method for disambiguating email recipient fields in an electronic device**
Verfahren zur Disambiguierung vom E-Mail-Empfängerfeldern bei einer elektronischen Vorrichtung
Procédé pour résoudre l'ambiguïté des champs de destinataires de courrier électroniques dans un dispositif électronique

(43) Date of publication of application: 29.04.2009
(73) Proprietor: BlackBerry Limited, Waterloo, ON N2K 0A7 (CA)
(72) Inventor: Vander Veen, Raymond, Waterloo Ontario N2V 2M6 (CA)
(74) Representative: MERH-IP Matias Erny Reichl Hoffmann Patentanwälte PartG mbB

(56) References cited:
- EP-A- 1 367 522
- EP-A- 1 469 374
- WO-A-2005/053279
- WO-A-2007/143232

## Description

The present disclosure relates generally to electronic devices, and in particular to a method for disambiguating email recipient fields in an electronic device.

Address book applications may be used for storing names, addresses, telephone and mobile phone numbers, fax numbers, email addresses, etc. Also, multiple addresses may be provided for each address book entry, such as one or more home phone and email addresses and one or more business phone and email addresses. In addition, address book applications may prompt a user to select one from a multitude of phone and email addresses when placing a call or composing an email message.

In the context of email, there are some circumstances in which a user may require a clear indication of which of a multitude of email addresses has been selected while composing an email. For example, if an email contains potentially sensitive company information it may be important for the user to be confident that the intended recipient's business email address has been selected, rather than a home or personal email address. Conversely, if the email contains potentially sensitive personal information it may be important for the user to be confident that the intended recipient's home or personal email address has been selected, rather than the recipient's business email address.

Thus, in general, a problem exists in providing an indication to a user of which of a multitude of email addresses has been selected while composing an email.

US-A-2007/143232, which was published after the filing date of the present application, sets forth a method of disambiguating multiple recipient email addresses in response to a user entering a partial recipient email address. According to this method, a warning may be presented to the user that an e-mail may be addressed to a recipient that is not desired or that is not part of the predetermined domain.

WO-A-2005/053279 discloses a system in which a small icon is displayed to identifying the type of a telephone number, such as home, work, mobile or e-mail address, in the case where the recipient has several numbers. In an example a small house indicates that the shown number is a home number.

### GENERAL

In one aspect there may be provided a method according to claim 1.

In another aspects there may be provided a portable electronic device including a memory having recorded thereon statements and instructions for execution by a processor to carry out the foregoing method and a computer readable medium storing instructions which when executed by a processor of a computing device adapt said device to perform the method.

### BRIEF DESCRIPTION OF THE DRAWINGS

The embodiments will be better understood with reference to the following Figures in which like numerals denote like parts and in which:
Figure 1 is a schematic diagram of a wireless communication system;
Figure 2 is a block diagram of components of a portable electronic device;
Figures 3A- 3E are screen shot representations of a graphical user interface associated with disambiguating email recipient fields according to an exemplary embodiment; and
Figure 4 is a flowchart showing a method for disambiguating email recipient fields according to an exemplary embodiment.

### DESCRIPTION OF PREFERRED EMBODIMENTS

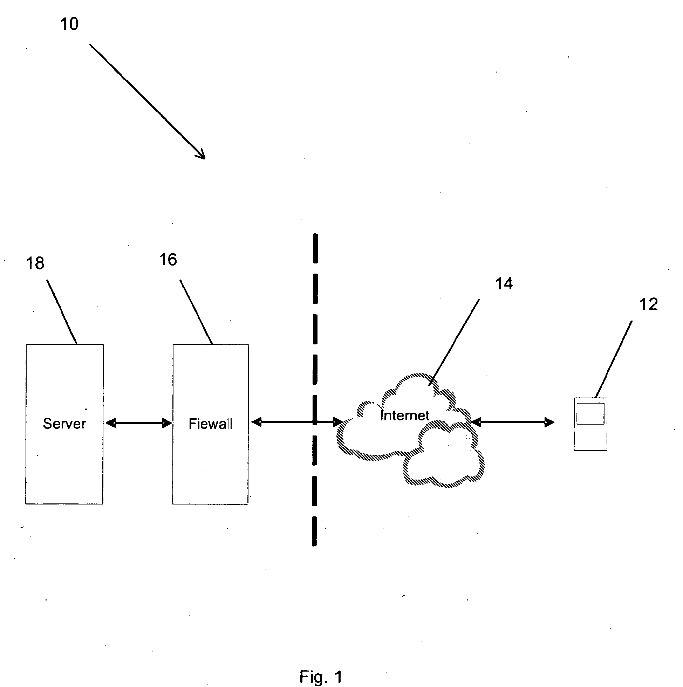

Figure 1 shows an exemplary communication system 10 for a portable electronic device 12. The portable electronic device 12 is operable to effect communications over a radio communications channel and communicates with a base station (not shown) while located within a coverage area that is defined by the base station. The base station is part of a wireless network that is in communication with the Internet 14. Data is delivered to the portable electronic device 12 via wireless transmission from the base station. Similarly, data is sent from the portable electronic device 12 via wireless transmission to the base station.

It will be appreciated that the portable electronic device 12 is movable within the coverage area and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the portable electronic device 12. A firewall, or proxy server, 16, is provided between the server 18 and the Internet 14. The server 18 further operates as a Mail Server, which communicates with an email client of the portable electronic device 12 to allow a user to send and receive email messages.

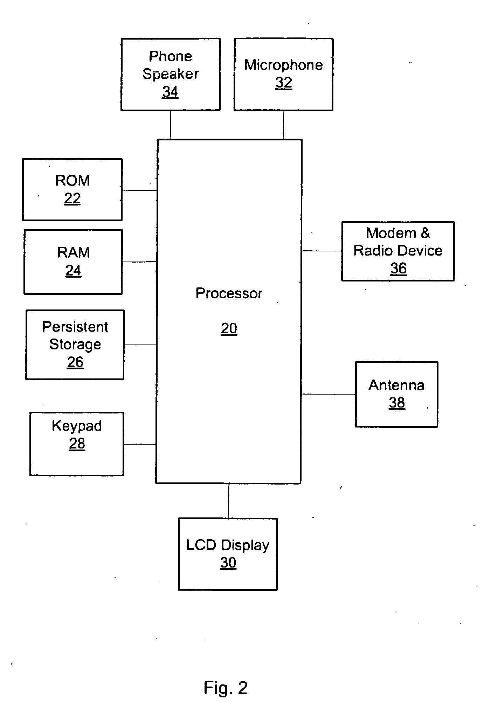

Figure 2 is a block diagram showing certain components within an exemplary embodiment of the portable electronic device 12. In this embodiment, the portable electronic device 12 is based on the computing environment and functionality of a wireless personal digital assistant (PDA). It will be understood, however, that the portable electronic device 12 is not limited to wireless personal digital assistants. Other portable electronic devices are possible, such as smart telephones, and laptop computers.

The portable electronic device 12 includes a processor 20 connected to a read-only-memory (ROM) 22 that contains a plurality of applications executable by the processor 20 for enabling each portable electronic device 12 to perform certain functions including, for example, PIN message functions, SMS message functions, address book and calendaring functions, and cellular telephone functions. The processor 20 is also connected to a random access memory unit (RAM) 24 and a persistent storage device 26 to facilitate various non-volatile storage functions of the portable electronic device 12. The processor 20 receives input from one or more input devices, including a keypad 28. The processor 20 outputs to one or more output devices, including an LCD display 30. A microphone 32 and phone speaker 34 are connected to the processor 20 for cellular telephone functions. The processor 20 is also connected to a modem and radio device 36. The modem and radio device 36 is used to connect to wireless networks and transmit and receive voice and data communications through an antenna 38.

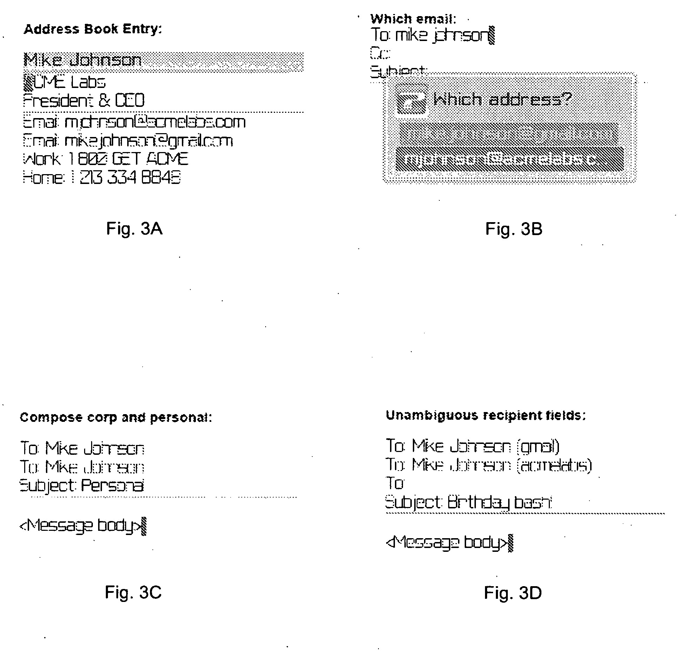

As discussed above, it is common for electronic device 12 to implement an address book application for storing names, addresses, telephone and mobile phone numbers, fax numbers, email addresses, etc. As shown in Figure 3A, multiple addresses and phone numbers may be stored for each address book entry, such as a home phone (1-213-334-8848), home email address (mikejohnson@gmail.com), a business phone (1-800-GET-ACME) and business email address (mjohnson@acmelabs.com). It is also common for such address book applications to prompt a user to select one from a multitude of phone and email addresses to place a call or compose an email message, as shown in Figure 3B. It will be noted that the address book application conventional displays a 'short form' of the intended recipient's name. Thus, in Figure 3B when mjohnson@acmelabs.com is selected, the address book application simply displays "Mike Johnson" in the "To:" field of the email message being composed. Accordingly, there is no way of distinguishing between the intended recipient's personal and business email addresses.

In the context of email, there are some circumstances in which a user may require a clear visual indication of which of a multitude of email addresses has been selected while composing an email. For example, if an email contains potentially sensitive company information it may be important for the user to be confident that the intended recipient's business email address has been selected, rather than a home or personal email address. Conversely, if the email contains potentially sensitive personal information it may be important for the user to be confident that the intended recipient's home or personal email address has been selected, rather than the recipient's business email address. Alternatively, if the user is uncertain as to whether the intended recipient (Mike Johnson) is at home or at the office on a given day at a given time, the user may specify both the personal and business email address, as shown in Figure 3C.

If, for some reason, the user decides that the content of the email message being composed is not appropriate for the intended recipient's business email address the user may wish to delete the intended recipient's business email address from the "To:" field of the email message. However, there is no way to discern between the personal and business email addresses in the conventional display of Figure 3C.

One possible solution is to include the intended recipient's full email address after the short form name (e.g. To: Mike Johnson (mjohnson@acmelabs.com) and To: Mike Johnson (mike.johnson@gmail.com). However, display of the intended recipient's full email address after the short form name is typically not feasible on a portable electronic 12 having only limited screen real estate.

Therefore, in accordance with an aspect of an embodiment of a method for disambiguating email recipient fields in an electronic device sufficient information is extracted from the domain portion of an intended recipient's email address to disambiguate between a personal and a business email address. Thus, as shown in Figure 3D, the first (i.e. left-most) label of the domain is displayed after the name of the intended recipient, thereby clearly distinguishing between the personal email address (gmail) and the business email address (acmelabs).

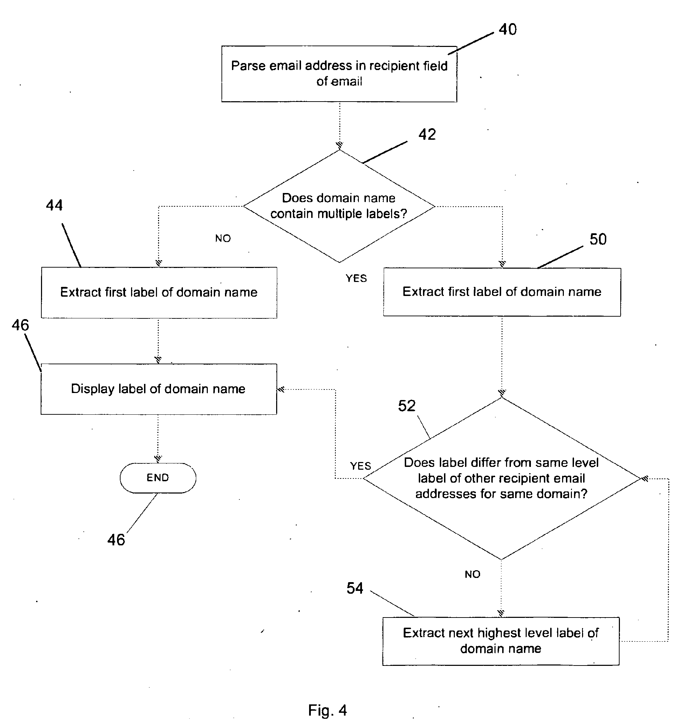

Referring to Figure 4, a flowchart is provided showing a method for disambiguating email recipient fields according to an exemplary embodiment. At step 40, the email address in the recipient field (e.g. mike.johnson@gmail.com) is parsed. The "second-level" domain directly to the left of the top level domain (i.e. gmail) is extracted (step 44) and then displayed (step 46). In one embodiment, the second-level domain (or "lowest level label" using the terminology of RFC 1034) is displayed adjacent the 'friendly' name (Mike Johnson) of the intended recipient, as shown in Figure 3D.

Although in many cases, the first label of the domain name will be sufficient to disambiguate the intended recipient's email address, where the domain name contains multiple labels (step 42), the exemplary method of Figure 4 extracts the first label of the domain name (step 50). If the first label (e.g. "city" in the domain name "city.waterloo.on.ca") is sufficient (i.e. a "YES" at step 52) to distinguish from the same level label (e.g. first) of any other recipient email addresses for the same domain (e.g. "suburbs" in "suburbs.waterloo.on.ca") then the first label is displayed (step 46). In one embodiment, the label is displayed adjacent the 'friendly' name of the intended recipient (e.g. "To: Mike Johnson (city)").

If the first label is not sufficient to disambiguate the intended recipient's email address, (i.e. a "NO" at step 52), then at step 54 the next highest level label is extracted (e.g. "waterloo" in "city.waterloo.on.ca") and step 52 is repeated. Thus, if Mike Johnson's email address is mjohnson@city.works.waterloo.on.ca, and other users are allocated addresses that are distinguished via the second label (i.e. "works") then repetition of method steps 52 and 54 will distinguish "city.works.waterloo.on.ca" from "city.parks.waterloo.on.ca", as but one example.

A person of ordinary skill in the art will understand that the exemplary method set forth in Figure 4 may be repeated an additional one or more times to display distinguishing labels for additional recipients identified in additional "To:", "c.c.:" or "b.c.c." fields of the email being composed, or to display distinguishing labels for alternate email addresses for the intended recipient identified in additional "To:", "c.c.:" or "b.c.c." fields of the email being composed, as shown in Figure 3D.

A specific embodiment has been shown and described herein. However, modifications and variations may occur to those skilled in the art. For example, although the exemplary embodiment has been described in terms of an address book application on a portable handheld electronic device, the principles set forth herein may be applied to address book implementations on other devices such as desktop computers, etc.

## Claims

1. A method of disambiguating multiple email addresses of an Intended recipient identified in an email being composed, the method comprising:
parsing (40) at least one of said multiple email addresses of the Intended recipient identified in a recipient field of said email to extract information capable of distinguishing said at least one of said multiple email addresses from at least another of said multiple emall addresses, said parsing including extracting (44, 50) information from the lowest-level label of the domain name of said at least one of said multiple addresses which allows to disambiguate said at least one of said multiple addresses; and
displaying (46) said information in the recipient field of said email.

2. A method as claimed in claim 1, further comprising displaying a name of said intended recipient adjacent said information.

3. A method as claimed in claim 1 or claim 2, further comprising prompting selection of said at least one of said multiple addresses prior to said parsing and responsive to entry of said name for said intended recipient in the recipient field of said email.

4. A method as claimed in any preceding claim, wherein said information comprises a lowest-level label of said domain name differing from the lowest-level label of the domain name of said at least another one of said multiple addresses.

5. A portable electronic device comprising a memory (22) having recorded thereon statements and instructions for execution by a processor (20) to carry out the method of any preceding claim.

6. A computer readable medium storing instructions which when executed by a processor (20) of a computing device adapt said device to perform the method of any of claims 1 to 4.

## Patentansprüche

1. Verfahren zur Disambiguierung von mehreren E-Mail-Adressen eines beabsichtigten Empfängers, der in einer zu verfassenden E-Mail identifiziert wird, das Verfahren umfassend:
Parsen (40) von zumindest einer dieser mehreren E-Mail Adressen des beabsichtigten Empfängers, die in einem Empfängerfeld dieser E-Mail angegeben sind, um Informationen zu extrahieren, die es ermöglichen, die besagte zumindest eine der besagten mehreren E-Mail-Adressen von zumindest einer anderen der mehreren E-Mai-Adressen zu unterschieden, wobei dieses Parsen das Extrahieren (44, 50) von Informationen aus der untersten Domainnamen-Ebene der besagten zumindest einen der besagten mehreren Adressen umfasst, was es erlaubt, diese zumindest eine der besagten vielen Adressen zu disambiguieren; und
Anzeigen (46) dieser Information in dem Empfängerfeld dieser E-Mail.

2. Verfahren gemäß Anspruch 1, ferner umfassend das Anzeigen eines Namens dieses beabsichtigten Empfängers neben der besagten Information.

3. Verfahren gemäß Anspruch 1 oder Anspruch 2, ferner umfassend das Auffordern zu einer Auswahl der besagten zumindest einer der besagten vielen Adressen vor dem besagten Parsen und als Reaktion auf das Eingeben des besagten Namens für den besagten beabsichtigten Empfänger in dem Empfängerfeld der besagten E-Mail.

4. Verfahren gemäß einem der vorstehenden Ansprüche, wobei diese Informationen ein Label der untersten Ebene dieses Domainnamens aufweisen, das sich von dem Label der untersten Ebene des Domainnamens der besagten zumindest einer anderen der besagten mehreren Adressen unterscheidet.

5. Tragbare elektronische Vorrichtung aufweisend einen Speicher (22), auf dem Angaben und Anweisungen zur Ausführung durch einen Prozessor (20) aufgenommen sind, um das Verfahren nach einem der vorstehenden Ansprüche durchzuführen.

6. Computerlesbares Medium, das Anweisungen speichert, die, wenn sie durch einen Prozessor (20) einer Rechnervorrichtung ausgeführt werden, diese Vorrichtung anpassen, um das Verfahren nach einem der Ansprüche 1 bis 4 durchzuführen.

## Revendications

1. Procédé de désambigüisation de multiples adresses de courrier électronique d'un destinataire prévu identifié dans un courrier électronique étant composé, le procédé comprenant le fait :
d'analyser (40) au moins une adresse desdites multiples adresses de courrier électronique du destinataire prévu identifié dans un champ destinataire dudit courrier électronique pour extraire des informations susceptibles de distinguer ladite au moins une adresse desdites multiples adresses de courrier électronique d'au moins une autre adresse desdites multiples adresses de courrier électronique, ladite analyse comportant le fait d'extraire (44, 50) des informations depuis l'étiquette de plus bas niveau du nom de domaine de ladite au moins une adresse desdites multiples adresses qui permettent de désambiguïser ladite au moins une adresse desdites multiples adresses ; et
d'afficher (46) lesdites informations dans le champ destinataire dudit courrier électronique.

2. Procédé tel que revendiqué dans la revendication 1, comprenant en outre le fait d'afficher un nom dudit destinataire prévu à côté desdites informations.

3. Procédé tel que revendiqué dans la revendication 1 ou 2, comprenant en outre le fait de proposer une sélection de ladite au moins une adresse desdites multiples adresses avant ladite analyse et en réponse à ladite entrée dudit nom pour ledit destinataire prévu dans le champ destinataire dudit courrier électronique.

4. Procédé tel que revendiqué dans l'une des revendications précédentes, dans lequel lesdites informations comprennent une étiquette de plus bas niveau dudit nom de domaine différente de l'étiquette de plus bas niveau du nom de domaine de ladite au moins une autre adresse desdites multiples adresses.

5. Dispositif électronique portable comprenant une mémoire (22) ayant enregistré sur celle-ci des déclarations et des instructions pour l'exécution par un processeur (20) afin de mettre en oeuvre le procédé de l'une des revendications précédentes.

6. Support lisible par ordinateur stockant des instructions qui, lorsqu'elles sont exécutées par un processeur (20) d'un dispositif informatique, adaptent ledit dispositif à réaliser le procédé de l'une des revendications 1 à 4.
